# EUROPEAN PATENT APPLICATION

(11) **EP 2 848 484 A2**
(43) Date of publication of application: **18.03.2015**
(21) Application number: 14184137.9
(22) Date of filing: 09.09.2014
(51) Int. Cl.: B60W 30/14

(54) **Driving assistance device**

(30) Priority: 11.09.2013 JP 2013188332
(71) Applicant: Toyota Jidosha Kabushiki Kaisha, Toyota-shi, Aichi-ken 471-8571 (JP)
(72) Inventor: Matsumura, Takeshi, TOYOTA-SHI, AICHI-KEN, 471-8571 (JP)
(74) Representative: Intès, Didier Gérard André

(57) **Abstract**

A driving assistance device (1) that learns travel data during a time in which a driver performs acceleration and deceleration operations to make a vehicle travel, and performs driving assistance based on learning vehicle speeds, including: storage means (20, 41) for storing a vehicle speed and an acceleration and deceleration tendency at the same place on a travel route respectively for a plurality of times during a time in which the driver performs the acceleration and deceleration operation; learning means (44) for identifying a plurality of learnable vehicle speeds from a plurality of vehicle speeds at the same place based on the acceleration and deceleration tendency, and learns vehicle speeds based on plurality of vehicle speeds when the dispersion of plurality of vehicle speeds identified as learnable is small; and driving assistance means (30, 31, 32, 33, 45, 46) for performing driving assistance based on learning vehicle speeds when the vehicle travels at a place where the vehicle speed is learned after learning.

## Description

### BACKGROUND OF THE INVENTION

### 1. Field of the Invention

The present invention relates to a driving assistance device that learns travel data during a time in which a driver performs driving operations to make a vehicle travel, and performs driving assistance based on a learned result.

### 2. Description of Related Art

Various devices for assisting a driver of a vehicle have been developed, and one of the devices performs driving assistance of travel control etc., such that the vehicle speed becomes a target speed. In some cases, as a target speed, vehicle speed data is stored during a time in which the driver performs driving operations to make the vehicle travel, and the vehicle speed data is learned to set the target speed. As driving assistance using the vehicle speed data generated by the driver's driving operation, for example, Japanese Patent Application Publication No. 2010-89698 (JP 2010-89698 A) has disclosed the vehicle speed at each place of the vehicle during a time in which the driver performs the driving operation to make the vehicle travel is stored, and the vehicle is controlled by using the stored vehicle speed as a vehicle speed target value of each place, when the vehicle is travelling under automatic driving. Further, as learning of the vehicle speed data, for example, Japanese Patent Application Publication No. 2011-161949 (JP 2011-161949 A) has disclosed learning times and a dispersion of the vehicle speeds (learning data) at each place of the vehicle are acquired, and a confidence is obtained from the learning times and dispersion (the confidence is high when the learning times are many, and when the dispersion is small), the higher the confidence (reliability), the higher the degree of using the learned vehicle speed for the travel control.

Even when the dispersion of the vehicle speeds at a certain place is small, the acceleration and deceleration tendencies generated by the driver's driving operation may have dispersion. In such cases, there is a high possibility that the vehicle speeds become the same at that place by coincidence, and the dispersion of the vehicle speeds becomes small. Because the dispersion of the vehicle speeds at such a place is small, if all of the vehicle speed data is used to learn, the learning will be based on vehicle speed data of low reliability. As a result, when the driving assistance is performed using the learned target vehicle speed, there is a possibility that the driving assistance is contrary to the driver's intention at that place. Specifically, on an ordinary road, because to the changes of the surrounding environment, or occurrence of the disturbance, the acceleration and deceleration tendency generated by the driver's driving operation is easily to change even at the same place.

### SUMMARY OF THE INVENTION

The present invention provides a driving assistance device that learns vehicle speed data generated by a driver's driving operation and performs driving assistance in accord with the driver's intention using the learned vehicle speed.

A first aspect of the invention provides a driving assistance device that learns travel data during a time in which a driver performs driving operations to make a vehicle travel, and performs driving assistance based on a learned result. The drive assistance device includes: storage means for storing respectively a vehicle speed and an acceleration and deceleration tendency at a same place on a travel route, for a plurality of times, during a time in which the driver performs acceleration and deceleration operations; learning means for identifying a plurality of object vehicle speeds used for learning from the plurality of vehicle speeds at the same place stored in the storage means based on the acceleration and deceleration tendency, and when a dispersion of the plurality of vehicle speeds identified as object is small, learns the vehicle speed at the same place based on the plurality of vehicle speeds having the small dispersion; and driving assistance means for performing driving assistance, based on the vehicle speed learned by the learning means, when the vehicle travels at a place where the vehicle speed is learned after learning of the learning means.

According to the first aspect, each time when the vehicle passes the same place on the travel route during a time in which the driver performs driving operations to make the vehicle travel, the vehicle speed and the acceleration and deceleration tendency are stored in the storage means. The acceleration and deceleration tendency shows the vehicle is accelerating or decelerating due to the driver's acceleration and deceleration operation, and when the vehicle is accelerating (decelerating), it may also show the degree of acceleration (degree of deceleration), such as rapid acceleration (rapid deceleration) and slow acceleration (slow deceleration). The same place may not be exactly the same; it may also include a place within a certain range in the forward-and-backward direction or in the left-right direction (for example, a place in a different lane). And, in the driving assistance device, a plurality of object vehicle speeds used for learning are identified from a plurality of vehicle speeds at the same place based on the acceleration and deceleration tendency by the learning means. Here, by identifying the vehicle speed data at the same place based on the acceleration and deceleration tendency, the vehicle speed data when the driver's acceleration and deceleration intention is the same can be extracted as a learning object, the acceleration and deceleration tendency reflects the driver's intention generated by the driver's acceleration and deceleration operation. The identifying includes: among the plurality of vehicle speeds at the same place stored in the storage means, a case where it is identified that all the vehicle speed data can become the learning object, a case where it is identified that all the vehicle speed data cannot become the learning object, a case where it is identified that only a part of the vehicle speed data can become the learning object, and a case where it is identified that a part of the vehicle speed data of a plurality of groups can become the learning object respectively etc. When there is a plurality of vehicle speeds identified as object used for learning, the driving assistance device obtains a dispersion of the plurality of vehicle speeds identified as object used for learning by the learning means, and learns the vehicle speeds at the same place based on the plurality of vehicle speeds with a less dispersion, only when the dispersion is small. That is, even though there is a plurality of vehicle speeds when the driver's acceleration and deceleration intention is the same, when the plurality of vehicle speeds is dispersed, the learning is not performed because the learning data is of low reliability after learning. On the other hand, when there are a plurality of vehicle speeds when the driver's acceleration and deceleration intention is the same, and the plurality of vehicle speeds are stable; the learning is performed because the learning data is of high reliability after learning. After learning of the learning means, when the vehicle travels at a place where the vehicle speed is learned, the driving assistance device performs driving assistance based on the learned vehicle speed by the driving assistance means. The learned vehicle speed is derived from the vehicle speed data with a small dispersion when the driver's acceleration and deceleration intention is the same, thus driving assistance is performed based on the learned vehicle speed, such that appropriate driving assistance in accord with the driver's acceleration and deceleration intention can be performed. Thus, the driving assistance device adds the acceleration and deceleration tendency to the vehicle speed generated by the driver's driving operation at the same place, only the vehicle speeds with small dispersion when the driver's acceleration and deceleration intention is the same can be learned, and driving assistance in accord with the driver's intention can be performed using the learned vehicle speed.

In the first aspect, the learning means may be configured to identify the vehicle speeds having a same acceleration and deceleration tendency from the plurality of vehicle speeds at the same place stored in the storage means as the plurality of object vehicle speeds. When the acceleration/deceleration tendency is the same, it can be estimated that the driver's acceleration/deceleration intention is the same, thus the plurality of vehicle speeds with the same acceleration/deceleration tendency can be used as the learning object.

In the first aspect, the learning means may be configured to identify a plurality of vehicle speeds having a small dispersion of degrees of acceleration and deceleration from the plurality of vehicle speeds at the same place stored in the storage means as the plurality of object vehicle speeds. When the dispersion of the degree of the acceleration and deceleration is small, it can be estimated that the driver's acceleration and deceleration intention is the same based on the plurality of acceleration and deceleration tendencies with a small dispersion, thus the plurality of vehicle speeds with a small dispersion of the degree of the acceleration and deceleration can be used as the learning object.

In the first aspect, the driving assistance means may not perform the driving assistance at the learned place based on the learned vehicle speed, when the vehicle speed learned by the learning means is of acceleration tendency and a current vehicle speed of the vehicle is higher than the learned vehicle speed by a predetermined amount or above, or when the vehicle speed learned by the learning means is of deceleration tendency and the current vehicle speed of the vehicle is lower than the learned vehicle speed by a predetermined amount or above.

Generally, if the current vehicle speed of the vehicle is higher than the learning vehicle speed (target vehicle speed); the driving assistance is performed to decelerate to the learning vehicle speed. When the learning vehicle speed has the acceleration tendency, even though the driver has the acceleration intention, the driving assistance for deceleration is performed. Therefore, when the learning vehicle speed has the acceleration tendency, the driving assistance means does not perform the driving assistance when the current vehicle speed of the vehicle is higher than the learning vehicle speed by a predetermined amount or above, thus the driving assistance of deceleration which is contrary to the driver's acceleration intention will not be performed. Also, generally, if the current vehicle speed of the vehicle is lower than the learning vehicle speed, the driving assistance is performed to accelerate to the learning vehicle speed. When the learning vehicle speed has the deceleration tendency, even though the driver has the deceleration intention, the driving assistance for acceleration is performed. Therefore, when the learning vehicle speed has the deceleration tendency, the driving assistance means does not perform the driving assistance when the current vehicle speed of the vehicle is lower than the learning vehicle speed by a predetermined amount or above, thus the driving assistance of acceleration which is contrary to the driver's deceleration intention will not be performed. The predetermined amount is the amount with a degree at which the driving assistance with small deceleration can be accepted by the driver with the acceleration intention, or the driving assistance with small acceleration can be accepted by the driver with the deceleration intention, which may be 0.

In the first aspect, the driving assistance device may further include separating means for analysing frequencies of the plurality of vehicle speeds at the same place stored in the storage means, and when the frequencies of the plurality of vehicle speeds are determined to have a multiple peaks by the analysis, separates the plurality of vehicle speeds into a plurality of vehicle speeds corresponding to a travel pattern at each peak of the multiple peaks. The learning means may identify the plurality of object vehicle speeds from the plurality of vehicle speeds corresponding to the travel pattern of a peak at each separated peak based on the acceleration and deceleration tendency, when the separating means separates the plurality of vehicle speeds at each peak of the multiple peaks, and learns the vehicle speed at the same place based on the plurality of vehicle speeds having the small dispersion, when the dispersion of the plurality of vehicle speeds identified as object is determined to be small. The driving assistance means may perform the driving assistance based on the vehicle speed learned by the learning means using the plurality of vehicle speeds corresponding to a travel pattern which matches the travelling travel pattern, when the separating means separates the plurality of vehicle speeds at each peak of the multiple peaks and the vehicle travels at a place where the vehicle speed is learned after learning of the learning means.

At places where the behavior of the vehicle changes to the plurality of travel patterns due to the red signal or blue signal of the traffic light etc., vehicle speeds corresponding to the plurality of travel patterns at the same place are included, and there are multiple peaks according to each vehicle speed data corresponding to the plurality of travel patterns. When there are multiple peaks, the plurality of vehicle speeds at the same place stored in the storage means will have a large dispersion if the plurality of vehicle speeds are left unchanged and the data becomes not suitable for learning. Therefore, the driving assistance device analyses the frequency of the plurality of vehicle speeds at the same place; identifies whether the frequency of the plurality of vehicle has multiple peaks; and separates the plurality of vehicle speeds into a plurality of vehicle speeds corresponding to the travel pattern at each peak of the multiple peaks by the separating means when the frequency has multiple peaks. When the separating means separates the plurality of vehicle speeds at each peak of the multiple peaks, the driving assistance device performs the learning by the learning means using the plurality of vehicle speeds corresponding to the travel pattern of the peak at each peak. After learning of the learning means, when a vehicle travels at the place where vehicle speed is learned, the learning assistance device performs the driving assistance by the driving assistance means based on the learned vehicle speed using the plurality of vehicle speeds corresponding to the same travel pattern with the travelling travel pattern. Thus, in the driving assistance device, the vehicle speed data with multiple peaks at the same place is separated respectively into vehicle speed data corresponding to a plurality of travel patterns at each peak, such that the vehicle speed data that is suitable for learning at each travel pattern can be learned respectively, so as to increase the learning opportunities. Further, the driving assistance device performs the driving assistance based on the vehicle speed learned from the vehicle speed data of the same travel pattern with the travelling travel pattern, such that driving assistance in accord with the driver's intention can be performed using the learned vehicle speed.

In the first aspect, the driving assistance device may further include surrounding environment detecting means for detecting surrounding environments of the vehicle, classifying means for classifying the surrounding environments into a plurality of surrounding environment patterns, when the surrounding environment detected by the surrounding environment detecting means changes over time and becomes a reason for changing a behavior of the vehicle, and separating means for separating the plurality of vehicle speeds at the same place stored in the storage means into a plurality of vehicle speeds corresponding to a surrounding environment pattern at each surrounding environment pattern, when the classifying means classifies the surrounding environments into a plurality of surrounding environment patterns. The learning means may identify a plurality of object vehicle speeds from the plurality of vehicle speeds corresponding to the surrounding environment pattern based on the acceleration and deceleration tendency, when the separating means separates the plurality of vehicle speeds at each surrounding environment pattern, and learns the vehicle speed at the same place based on the plurality of vehicle speeds identified as object having the small dispersion, when the dispersion of the plurality of vehicle speeds identified as object is determined to be small. The driving assistance means may perform the driving assistance based on the vehicle speed learned by the learning means using the plurality of vehicle speeds corresponding to a surrounding environment pattern which matches the travelling surrounding environment pattern, when the separating means separates the plurality of vehicle speeds at each surrounding environment pattern and the vehicle travels at the place where the vehicle speed is learned after learning of the learning means.

In the surrounding environment of a vehicle, there are some surrounding environments that may become the reason of changing the vehicle's behavior, such as the above-mentioned traffic light. In such a surrounding environment, there are a plurality of patterns in which the vehicle's behavior changes, such as a travel pattern under red signal and a travel pattern under blue signal. Therefore, the driving assistance device detects the surrounding environment of the vehicle by the surrounding environment detecting means. When the detected surrounding environment changes over time and becomes a reason of changing the vehicle's behavior, the driving assistance device classifies the surrounding environment into a plurality of patterns by the classifying means. Then, the driving assistance device separates a plurality of vehicle speeds at the same place into a plurality of vehicle speeds corresponding to the surrounding environment pattern, at each surrounding environment pattern (hence, at each peak of the multiple peaks of the vehicle speed data) respectively. When the separating means separates the plurality of vehicle speeds at each surrounding environment pattern, the driving assistance device performs the learning by the learning means at each surrounding environment pattern using the plurality of vehicle speeds corresponding to the surrounding environment pattern. After learning of the learning means, when the vehicle travels at a place where vehicle speed is learned, the driving assistance device performs the driving assistance by the driving assistance means based on the learned vehicle speed using the plurality of vehicle speeds corresponding to the same surrounding environment pattern with the travelling surrounding environment pattern. Thus, in the driving assistance device, when the surrounding environment becomes the reason of changing the vehicle's behavior, the vehicle speed data is separated at each of the plurality of patterns in the surrounding environment, such that the vehicle speed data that is suitable for learning at each surrounding environment can be learned respectively, and the learning opportunities can be increased. Further, the driving assistance device performs the driving assistance based on the vehicle speed learned from the vehicle speed data of the same surrounding environment pattern with the travelling surrounding environment pattern, thus, the driving assistance in accord with the driver's intention can be performed using the learned vehicle speed.

In the first aspect, the driving assistance device may further include preceding vehicle detecting means for detecting a preceding vehicle travelling in front of the vehicle, and correcting means for correcting the vehicle speeds stored during a time in which the preceding vehicle is detected by the preceding vehicle detecting means among the plurality of vehicle speeds at the same place stored in the storage means to the side of the vehicle speeds stored during a time in which the preceding vehicle is not detected, by using the vehicle speeds stored during the time in which the preceding vehicle is not detected by the preceding vehicle detecting means, and stores corrected vehicle speeds in the storage means. The learning means, when the correcting means performs the correction, may identify the plurality of object vehicle speeds from the corrected vehicle speeds at the same place stored in the storage means and the vehicle speeds stored during the time in which the preceding vehicle is not detected by the preceding vehicle detecting means based on the acceleration and deceleration tendency, and learns the vehicle speed at the same place based on the plurality of vehicle speeds having the small dispersion, when the dispersion of the plurality of vehicle speeds identified as object is small.

When a vehicle is present in front of the vehicle mounted with the driving assistance device, the driver performs the acceleration and deceleration operation and is influenced by the vehicle speed of the preceding vehicle. Therefore, among the plurality of vehicle speeds at the same place, there is a possibility that the vehicle speed stored when the preceding vehicle is present is not desired by the driver. Therefore, the driving assistance device detects the preceding vehicle by the preceding vehicle detecting means. Then, the driving assistance device corrects, by the correcting means, the vehicle speeds stored during a time in which the preceding vehicle is detected among the plurality of vehicle speeds at the same place to the vehicle speed side stored during a time in which the preceding vehicle is not detected using the vehicle speed during a time in which the preceding vehicle is not detected, and the corrected vehicle speeds are stored in the storage means. When the correction is performed by the correcting means, the learning means performs learning, using the corrected vehicle speed data stored in the storage means and the vehicle speed data stored during a time in which the preceding vehicle is not detected. Thus, the driving assistance device corrects the vehicle speeds stored during a time in which the preceding vehicle is detected with the vehicle speed stored when the preceding vehicle is absent, thus, the vehicle speed data further in accord with the driver's intention can be used for learning, and the precision of the learning can be further improved.

In the first aspect, the storage means may be configured to store respectively the vehicle speeds at a plurality of places on the travel route at each first period, and calculates a dispersion of vehicle speeds within a predetermined range based on the stored vehicle speeds at the plurality of places, and when the calculated dispersion of the vehicle speeds within the predetermined range is small, stores the vehicle speed concerning a place included within the predetermined range at each second period which is shorter than the first period..

Since the storage capacity for storing the learning data is limited, it is desirable to reduce the amount of data stored for learning as much as possible. Therefore, the driving assistance device first stores the vehicle speeds at a plurality of places on the travel route at each first cycle by the storage means respectively. The first cycle is a long cycle. As for the cycle, there is a cycle of time, a cycle of distance etc. Then, the driving assistance device calculates, by the storage means, the dispersion of the vehicle speeds within a predetermined range based on the vehicle speeds at a plurality of places stored at each first cycle. The dispersion includes density, variance etc. Within the predetermined range where the dispersion of the vehicle speeds is small, the vehicle speeds generated by the driver's driving operation is stable, thus the place is suitable for learning. Therefore, the driving assistance device stores the vehicle speeds at each second cycle at places included in the predetermined range by the storage means, when the dispersion is small. The second cycle is shorter than the first cycle, for collecting learning data at a short cycle. Thus, the driving assistance device stores the vehicle speed data only at the places suitable for learning at a short cycle, thereby the amount of data stored for learning can be reduced.

In the first aspect, the driving assistance means may be configured to provide the learned vehicle speed at the learned place and information of the acceleration and deceleration control performed based on the learned vehicle speed, when the vehicle travels at a place where the vehicle speed is learned after learning of the learning means.

According to the above aspect, by adding the acceleration and deceleration tendency to the vehicle speed generated by the driver's driving operation at the same place, only the vehicle speeds with small dispersion when the driver's acceleration and deceleration intention is the same can be learned, and the learned vehicle speed can be used to perform driving assistance in accord with the driver's intention.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG.. 1 is a configuration diagram illustrating the driving assistance device in accordance with an embodiment of the present invention;
FIGS. 2A-2C are diagrams illustrating the process of the storage control portion of in FIG. 1; FIG. 2A illustrates an example of vehicle speed data with a wide interval (long period), FIG. 2B illustrates an example of the vehicle speed range and density stability of each density; FIG. 2C illustrates an example of vehicle speed data with a narrow interval (short period) and a wide interval (long period);
FIG. 3 is an example illustrating the data of the correction object of the correcting portion of FIG. 1;
FIGS. 4A, 4B illustrate an example of data with multiple peaks of the separation object of the separating portion of FIG. 1; FIG. 4A illustrates an example of data with multiple peaks in different trends; FIG. 4B illustrates an example of data with multiple peaks in the same trend;
FIGS. 5A, 5B illustrate an example of data of the learning object of the learning portion of FIG. 1; FIG. 5A illustrates an example of the learning data of an acceleration trend; FIG. 5B illustrates an example of data mixed with learned data of an acceleration trend and unlearned data of a deceleration trend;
FIGS. 6A, 6B illustrate an example of HMI performed by the HMI control portion of FIG. 1; FIG. 6A illustrates an example of a learning place on the travel route; FIG. 6B illustrates an example showing on the display;
FIG. 7 illustrates an example where it is controlled and limited by the travel control portion of FIG. 1;
FIGS. 8A and 8B are flowchart illustrating the action flow of learning of the driving assistance device of FIG. 1.

### DETAILED DESCRIPTION OF EMBODIMENTS

In the following description, the embodiments of the driving assistance device of the present invention will be described with reference to the drawings. Also, the same or corresponding elements in the drawings are denoted by the same reference numerals, and the repeated description is omitted.

In the present embodiment, the present invention is applied to a driving assistance device which performs driving assistance to a vehicle's movement in a front-rear direction. The driving assistance device of the present embodiment learns a driver's driving behavior to set a target vehicle speed (learning vehicle speed) at each place, and uses the target vehicle speed to perform travel control, information provision. The driving assistance device of the present embodiment constantly performs information provision, and performs travel control when instructed by the driver. However, even under the travel control, the acceleration and deceleration operation is prioritized when this operation is performed by the driver. Also, in the travel control, when a preceding vehicle is absent, control is performed such that the vehicle speed becomes the learned target vehicle speed; when there the preceding vehicle is present, control is performed to keep a distance from the preceding vehicle and follow.

Also, at a place where the target vehicle speed generated by learning is not set, a target vehicle speed learned by other vehicles may be acquired from many other vehicles via vehicle-to-vehicle communication etc., and the median value, average value etc. are set; alternatively, the target vehicle speed may also be set based on the speed limit on the road during travelling. A target speed is set at each place with a given distance interval (for example 100m, 200m), an acceleration control region, a deceleration control region etc. are set before that place, so as to achieve the target speed at that place. The learned place may not be exactly the same place; it also includes a place within a predetermined range relative to the exactly same place in the front-rear direction (for example, a place several meters away in the front-rear direction) and the left-right direction (for example, a place at a different lane). The predetermined range is set by considering the detecting error of the unit which detects the place of the vehicle, etc.

Incidentally, on an express way, and a toll way etc., it is possible to perform the driving assistance for maintaining a predetermined vehicle speed, and it may also be a fixed target speed. But on the ordinary road etc., under the situation where the speed of the vehicle frequently changes due to various reasons, such as the speed limit on each road, the surrounding environment such as the traffic light, the change of the traffic volume etc., it is necessary that the target vehicle speed changes correspondingly, and if it is not a target vehicle speed suitable for each place, convenience of the driving will be decreased. The driving assistance device of the present embodiment can perform learning at each place on the travel route to set the target vehicle speed, thus, it is suitable for such an ordinary road etc. where the vehicle speed changes frequently.

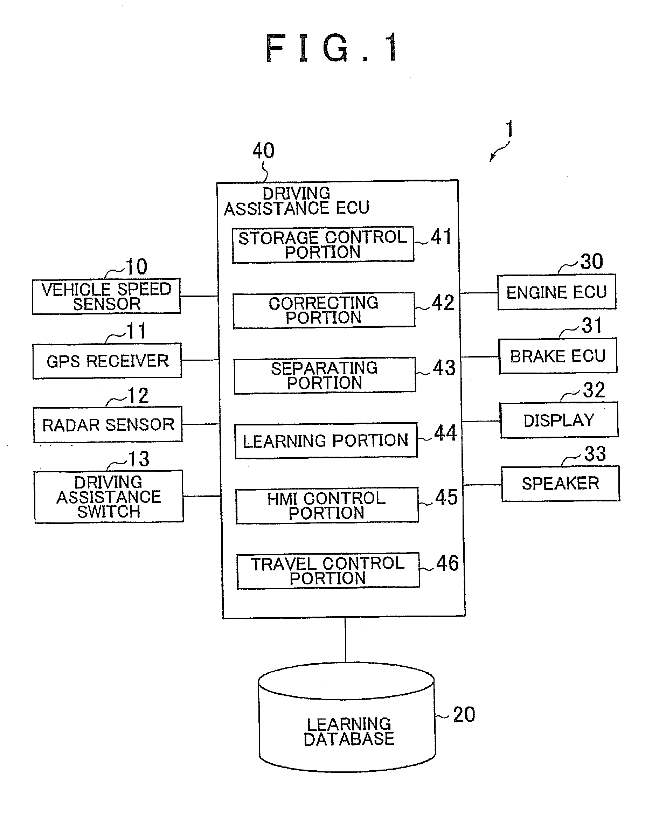

The configuration of a driving assistance device 1 of the present embodiment is described with reference to FIG. 1. FIG. 1 is a configuration diagram illustrating the driving assistance device 1 in accordance with the embodiment.

The driving assistance device 1 performs driving assistance in accord with the driver's intention (specifically, the acceleration intention and the deceleration intention). Thus, the driving assistance device 1 learns the position where the behavior is stable at the same place when the vehicle is travelling under the driving operation of the driver (a position where the dispersion of the vehicle speeds is small), in addition to vehicle speed, the acceleration and deceleration trend (tendency) is also considered at the time of learning. As the acceleration and deceleration trend, there are an acceleration trend, a deceleration trend and another trend (constant speed etc.). Further, the driving assistance device 1 considers the acceleration and deceleration trend at the time of learning, and does not perform travel control not in accord with the driver's acceleration and deceleration intention, even when the current vehicle speed is different from the target vehicle speed (learning vehicle speed).

The driving assistance device 1 includes a vehicle speed sensor 10, a GPS (global positioning system) receiver 11, a radar sensor 12, a driving assistance switch 13, a learning database 20, an engine ECU (electronic control unit) 30, a brake ECU 31, a display 32, a speaker 33, a driving assistance ECU 40 (a storage control portion 41, a correcting portion 42, a separating portion 43, a learning portion 44, HMI (human machine interface) control portion 45, a travel control portion 46) etc.

Also, in the present embodiment, the learning database 20 and the storage control portion 41 of the driving assistance ECU 40 function as the storage means of the invention; the learning portion 44 of the driving assistance ECU 40 functions as the learning means of the invention; the engine ECU 30, the brake ECU 31, the display 32, the speaker 33, the HMI control portion 45 and the travel control portion 46 of the driving assistance ECU 40 function as the driving assistance means of the invention; the radar sensor 12 functions as the preceding vehicle detecting means of the invention; the correcting portion 42 of the driving assistance ECU 40 functions as the correcting means of the invention; the separating portion 43 of the driving assistance ECU 40 functions as the separating means of the invention.

The vehicle speed sensor 10 is a sensor for detecting the speed of the vehicle. The vehicle speed sensor 10 detects the vehicle speed, and sends the detected vehicle speed to the driving assistance ECU 40 as a vehicle speed signal. Also, as the sensor that detects the vehicle speed, for example, there is a wheel speed sensor which detects the rotation speed of each wheel (pulse number corresponding to the wheel rotation), calculates the wheel speed from the rotation pulse number of each wheel respectively, and calculates the vehicle body speed (vehicle speed) from the wheel speed of each wheel.

The GPS receiver 11 includes a GPS antenna, a processing device etc. The GPS receiver 11 receives a GPS signal from each GPS satellite with the GPS antenna. And the GPS receiver 11 demodulates each GPS signal with the processing device, and calculates the current place of the vehicle (latitude, longitude) etc. based on each of the demodulated GPS information. The GPS receiver 11 outputs the information about the current place of the vehicle etc. to the driving assistance ECU 40 as a current place signal. Also, when the vehicle is mounted with a navigation device, it may be configured that the information of the current place is provided from the navigation device.

The radar sensor 12 is radar for detecting an object in front of the vehicle (specifically a preceding vehicle), using electromagnetic waves such as millimeter wave, laser light etc. The radar sensor 12 scans while transmitting electromagnetic waves in front of the vehicle in the left-right direction, and receives a reflecting wave which is reflected back. When the reflecting wave cannot be received, the radar sensor 12 determines that the preceding vehicle is absent; when the reflecting wave can be received, the radar sensor 12 calculates the relative distance to the preceding vehicle, the relative speed and the relative direction (lateral place) etc., using the information (scanning azimuth angle in the left-right direction, the sending time, the receiving time, reflection strength, etc.) about each reflection point (each detection point) where the reflecting wave can be received. And, the radar sensor 12 sends the absence-presence of the preceding vehicle, the various information calculated when the preceding vehicle is present to the driving assistance ECU 40 as a radar detection signal. Also, the units to detect the preceding vehicle may also be a camera, other units using vehicle-to-vehicle communication device.

The driving assistance switch 13 is a switch used for starting/ending the travel control performed by the driving assistance device 1. The driving assistance switch 13 is an ON/OFF switch, and switches ON/OFF to the acceleration control and ON/OFF to the deceleration control. The driving assistance switch 13 is, for example, a hardware switch disposed on the center console or the steering wheel of the vehicle, which may input ON/OFF by a pressing operation of the driver; or a switch displayed on a vehicle mounted display, which may input ON/OFF by the driver touching the display. The driving assistance switch 13 sends the ON/OFF state of each control which is input by the driver of the vehicle to the driving assistance ECU 40 as a switch signal.

Also, as the unit for starting the travel control performed by the driving assistance device 1, the operation to an acceleration pedal or a brake pedal may be used, for example, the operation to start the acceleration control includes stepping down the acceleration pedal gently, releasing the brake pedal; the operation to start the deceleration control includes stepping down the brake pedal gently, releasing the acceleration pedal. When the travel control is started/ended by such a pedal operation, it is not necessary to dispose the driving assistance switch 13 separately. The operation of stepping down the acceleration pedal gently is, for example, an operation in which the detection value of the accelerator opening of the acceleration pedal changes from 0 to a value exceeding a threshold value (for example, the minimum value that is detectable by the sensor). The operation of releasing the acceleration pedal is, for example, an operation in which the detection value of the accelerator opening of the acceleration pedal changes from the predetermined value to 0. The operation of stepping down the brake pedal gently is, for example, an operation in which the detection value of the stepping amount of the brake pedal changes from 0 to a value exceeding the threshold value (for example, the minimum value that is detectable by the sensor). The operation of releasing the brake pedal is, for example, an operation in which the detection value of the stepping amount of the brake pedal changes from the predetermined value to 0.

The learning database 20 is a database that stores data relating to the learning of the driving assistance device 1. The learning database 20 is configured in a predetermined area of a writable/readable storage device, such as a hard disk. Learning data and learning determination data etc. are stored in the learning database 20. Learning data is data used for learning, which is collected with a high sampling period. Learning data includes travel times, the vehicle speed, the acceleration and deceleration (vector), the acceleration and deceleration trend, and data of the presence-absence of the preceding vehicle etc. at each place. Learning determination data is data used for determining whether it is a learnable place, which is collected with a low sampling period. Learning determination data includes travel times, the vehicle speed, the acceleration and deceleration, and data of the presence-absence of the preceding vehicle etc. at each place. The sampling period may be a period of travel distance, or a period of time. Also, the learning database 20 may also be configured in the driving assistance ECU 40. Also, in order to obtain the acceleration and deceleration, at least the vehicle speed is stored in association with detection time.

The engine ECU 30 is an ECU that controls the engine (hence, the driving force). The engine ECU 30 calculates a requested driving force (target acceleration) based on the operation of the acceleration pedal performed by the driver. The engine ECU 30 controls the amount of suction air, the fuel injection amount, and ignition of the engine etc., in order to become the target acceleration. Specifically, if an engine control signal is received from the driving assistance ECU 40, the engine ECU 30 performs control for becoming the target acceleration shown by the engine control signal.

The brake ECU 31 is an ECU to control the brake (hence, the braking force) of each wheel. The brake ECU 31 calculates a requested braking force (a target deceleration) based on the operation of the brake pedal performed by the driver. And, the brake ECU 31 controls the brake hydraulic pressure of the wheel cylinder of each wheel, in order to become the target deceleration. Specifically, if a brake control signal is received from the driving assistance ECU 40, the brake ECU 31 performs control for becoming the target deceleration shown by the brake control signal.

The display 32 is a display for providing information through the display of the HMI of the driving assistance device 1. The display 32 is a display shared with other vehicle mounted devices, such as HUD (head-up display), display of the navigation device, and display in the combination meter. If a display control signal is received from the driving assistance ECU 40, the display 32 displays an image based on the display control signal.

The speaker 33 is a speaker for providing information through sound of the HMI of the driving assistance device 1. The speaker 33 is a speaker shared with other vehicle mounted devices. If a sound control signal is received from the driving assistance ECU 40, the speaker 33 outputs sound based on the sound control signal.

The driving assistance ECU 40 includes CPU (central processing unit), ROM (read only memory), and RAM (random access memory) etc., and is an electronic control unit that controls the driving assistance device 1 comprehensively. The driving assistance ECU 40 constitutes the storage control portion 41, the correcting portion 42, the separating portion 43, the learning portion 44, the HMI control portion 45, and the travel control portion 46, by loading an application program stored in the ROM into the RAM, and executing by the CPU. The driving assistance ECU 40 receives each signal from the vehicle speed sensor 10, the GPS receiver 11, the radar sensor 12 and the driving assistance switch 13. At this time, the driving assistance ECU 40 associates the time when the signal is received with information of the vehicle speed etc. obtained from each signal, if necessary. Also, the driving assistance ECU 40 performs the process of the storage control portion 41, the correcting portion 42, the separating portion 43, the learning portion 44, the HMI control portion 45, and the travel control portion 46 based on the information of each signal, and sends each control signal to the engine ECU 30, the brake ECU 31, the display 32 and the speaker 33, if necessary.

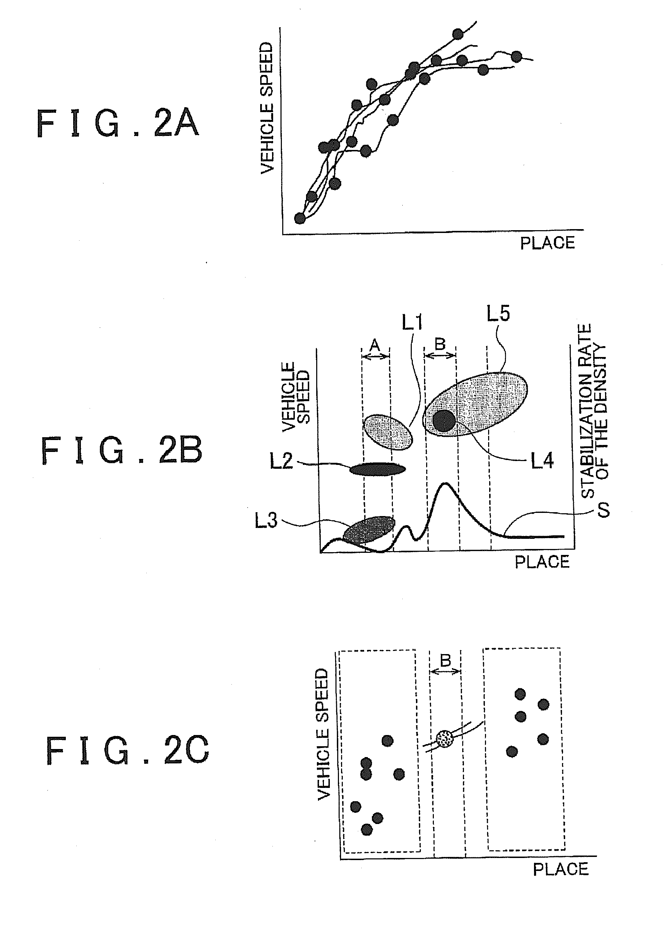

The process of the storage control portion 41 is described with reference to FIG. 2. FIG. 2 is a diagram illustrating the process of the storage control portion 41; in FIGS. 2A to 2C, the horizontal axis illustrates the place of the vehicle in front-rear direction, the vertical axis illustrates the vehicle speed; specifically in FIG. 2B, the vertical axis illustrates the density stabilization rate. When the travel data during the driving operation of the driver is collected and stored for the learning, it is necessary to store all the travel routes with a high sampling period, in order to learn the stable vehicle speed at each place on the travel route, however, this needs a huge storage capacity. But the storage capacity of the learning database 20 is limited, thus, by making the storage condition (the sampling period) change according to the travel times, the stability of the vehicle speeds at each travel place during travelling, the amount of stored data is reduced. To change the condition, the storage control portion 41 performs storage control in 4 stages.

First, the storage control portion 41 compares all the places stored in the learning database 20 with the current travelling place, when it is determined that the place is on the route (road) where the vehicle travels for the first time under the driver's driving operation, only "the route has been travelled on" is stored. Here, only each place on the route is stored in the learning database 20, other data other than place, such as vehicle speed, is not stored.

Then, the storage control portion 41 compares each place on the route where the vehicle has travelled on stored in the learning database 20 with the current travelling place; when it is determined that it is the route that has been travelled on in the past, it is stored with a low sampling period. Here, the vehicle speed (the vehicle speed is stored in association with time), the travel times, the presence-absence of the preceding vehicle are stored corresponding to each place on the route in the learning determination data of the learning database 20. The low sampling period is set by considering the storage capacity etc. of the learning determination data area in the learning database 20, for example, a period with an interval of 100m. FIG. 2A is a graph illustrating an example of the vehicle speed data stored with a low sampling period (wide interval), the black spots are the vehicle speeds at each place.

Then, the storage control portion 41 calculates the density stabilization rate of the vehicle speeds of each area, concerning the routes where the travel times are a predetermined number or above. To calculate the density stabilization rate, the vehicle speed included in each area defined by a latitude-longitude mesh (the vehicle speed stored in the learning determination data of the learning database 20) is used for calculating the density of the vehicle speeds, and then the density stabilization rate of the vehicle speeds is calculated. The density stabilization rate of the vehicle speeds is an index showing the degree of dispersion of the vehicle speeds collected in the same area. The narrower the location with high density in the vehicle speed direction, the higher the stabilization rate is (the dispersion of the vehicle speeds in the area is small); the wider the location, the lower the stabilization rate is (the dispersion of the vehicle speeds in the area is large). A variance may be used instead of the stabilization rate. Then, the storage control portion 41 determines whether the density stabilization rate of each area is higher than a threshold value, and specifies an area where the density stabilization rate is higher than the threshold value. In the specified area, the location with high density of vehicle speeds is narrow in the vehicle speed direction, the vehicle speeds are stable, and thus, the specified area is the location of the learning objects. The determination threshold value is preset through experiments and simulations etc. FIG. 2B is a graph S illustrating the vehicle speed ranges L1, L2, L3, L4, L5 of each density (in this example, the darker, the higher the density is) and the density stabilization rate. In the case of this example, in area A, there are separately the vehicle speed ranges L1, L2, L3 of each density, where the density stabilization rate is low; on the other hand, in area B, there are the vehicle speed range L4 with high density and the vehicle speed range L5 around vehicle speed range L4 with lower density, where the density stabilization rate is high. This area B is specified as the location where the density stabilization rate is a threshold value or above, and becomes the area of learning objects. Also, in FIG. 2, the horizontal axis illustrates the vehicle place in the front-rear direction, thus only one-dimensional range in the front-rear direction of a vehicle is illustrated out of a two-dimensional area. However, the vehicle speed ranges of each density of FIG. 2B illustrate the vehicle speed range of the density of the vehicle speed in a two-dimensional area, which also includes the range in the left-right direction of a vehicle.

Then, the storage control portion 41 stores the area where the density stabilization rate is higher than the threshold value with a high sampling period. Here, the vehicle speed (the vehicle speed is stored in association with time), the acceleration and deceleration, the acceleration and deceleration trend, the travel times, the presence-absence of the preceding vehicle, and the target vehicle speed (the learning vehicle speed) when the learning portion 44 performs a learning, are stored in the learning data of the learning database 20 corresponding to each place on the route. The high sampling period is set by considering the storage capacity of the learning data area of the learning database 20, for example, with an interval of several meters. FIG. 2C illustrates an example of the vehicle speed data stored with a high sampling period (narrow interval) at each place in area B, and with a low sampling period (wide interval) at its front and back area.

Also, the vehicle speed uses information from the vehicle speed sensor 10. The place uses information from the GPS receiver 11. The acceleration and deceleration is calculated from the change of the vehicle speed. The acceleration and deceleration may be divided into acceleration and deceleration separately, or may be represented by acceleration and deceleration constituted by a positive-negative value. The acceleration and deceleration trend is identified to the acceleration trend, the deceleration trend, or another trend, based on the value of the acceleration and deceleration, or the tendency of the vehicle speed change at each place etc. For example, concerning the distinguishing based on the acceleration and deceleration, when the acceleration and deceleration is a positive-negative value, when the value of the acceleration and deceleration is larger than a positive threshold value, it is identified as the acceleration trend; when the value of the acceleration and deceleration is less than a negative threshold value, it is identified as the deceleration trend; when the value of the acceleration and deceleration falls between the negative threshold value and the positive threshold value, it is identified as another trend. Also, concerning the distinguishing based on the tendency of the vehicle speed change, when the value of the tendency of the vehicle speed change is larger than a positive threshold value, it is identified as the acceleration trend; when the value of the tendency of the vehicle speed change is less than a negative threshold value, it is identified as the deceleration trend; when the value of the tendency of the vehicle speed change falls between the negative threshold value and the positive threshold value, it is identified as another trend. Each distinguishing threshold value is preset through experiments, simulations etc. The presence-absence of the preceding vehicle uses information from the radar sensor 12.

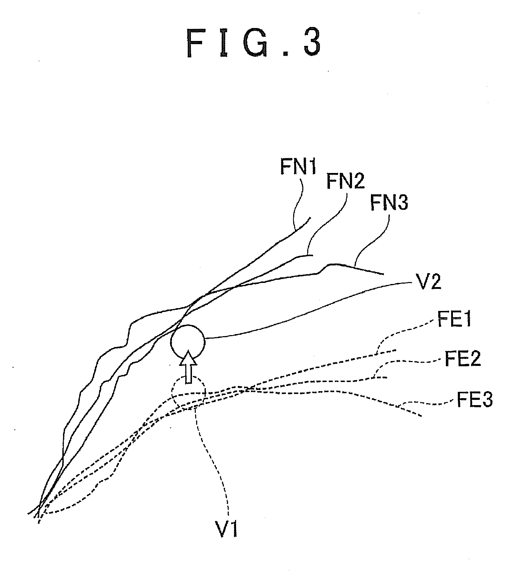

The process of the correcting portion 42 is described with reference to FIG. 3. FIG. 3 is an example of data of the correction object of the correcting portion 42. The lines FN1, FN2 ... shown in FIG. 3 illustrate the vehicle speed at each place on the route. The vehicle speed increases from left to right upwardly, thus it is the acceleration trend. When the vehicle is travelling under the driver's driving operation, if a vehicle is present in the front, the driver's driving behavior will be influenced by the speed of the preceding vehicle and becomes unstable. Specifically, there is a high possibility that the vehicle is travelling at a speed lower than the vehicle speed desired by the driver. Therefore, as vehicle speed data used for learning, the vehicle speed data when the preceding vehicle is absent is preferable. However, if the traffic volume is large, the vehicle speed data used for learning cannot be collected smoothly, thus, the vehicle speed data when the preceding vehicle is present can also be used. Therefore, the correcting portion 42 corrects the vehicle speed data when the preceding vehicle is present, assuming that the driver wants to travel at a higher vehicle speed than that vehicle speed. As illustrated in the example of FIG. 3, the vehicle speed data FE1, FE2, FE3 when the preceding vehicle is present is lower than the vehicle speed data FN1, FN2, FN3 when the preceding vehicle is absent. Also, the preceding vehicle is a vehicle within a given distance, which brings influence to the driver's driving behavior. The given distance may be preset, or may be a variable value corresponding to the speed limit on the road.

The correcting portion 42 corrects, at each place stored in the learning database 20, the vehicle speed when the preceding vehicle is present among the vehicle speed data at that place to the vehicle speed side when the preceding vehicle is absent, using the vehicle speed data when the preceding vehicle is absent. In the case of the example illustrated in FIG. 3, the vehicle speed V1 when the preceding vehicle is present is corrected to a higher vehicle speed V2 at the vehicle speed data when the preceding vehicle is absent, using the vehicle speed data FN1, FN2, FN3 when the preceding vehicle is absent.

An example of the correction method is described. For example, the vehicle speed data at certain place where the preceding vehicle is absent is 56, 52, 54 (km/h), and the vehicle speed data at the place where the preceding vehicle is present is 24, 36, 42, 14 (km/h). With the original data, the median value is 42 (km/h), and the average value is 39.7 (km/h). Considering that the driver desires a higher vehicle speed than this. Therefore, each vehicle speed of the vehicle speed data when the preceding vehicle is present is corrected respectively, utilizing (56+52)/2=54 (km/h), the median value of the vehicle speed data when the preceding vehicle is absent. Here, the median value 54 (km/h) and the vehicle speed data when the preceding vehicle is present (24, 36, 42, 14 (km/h)) are divided with a weight of 2:1 and corrected. For example, in the case of 24 (km/h), it becomes (54×2+24)/3 = 44 (km/h). Thus, each vehicle speed when the preceding vehicle is present 24, 36, 42, 14 (km/h) becomes 44, 48, 50, 40.7 (km/h). In this case, from the vehicle speeds 56, 52, 54 (km/h) when the preceding vehicle is absent and the corrected vehicle speeds 44, 48, 50, 40.7 (km/h), the median value becomes 50 (km/h) and the average value becomes 49.2 (km/h).

Also, when the vehicle speed data when the preceding vehicle is absent is not collected yet, the above correction will not be performed. Thus, when there is no vehicle speed data when the preceding vehicle is absent, a given vehicle speed may be added respectively to each vehicle speed of the vehicle speed data collected when the preceding vehicle is present to correct. The given vehicle speed is preset through experiments, simulations etc. When the corrected vehicle speed, which added the given vehicle speed respectively, exceeds the speed limit on the road, the speed limit on the road may be the upper limit of the corrected vehicle speed. Also, in cases where the vehicle speed data when the preceding vehicle is absent cannot be sufficiently collected, all the vehicle speed data when the preceding vehicle is present may be discarded, and the above correction may not be performed.

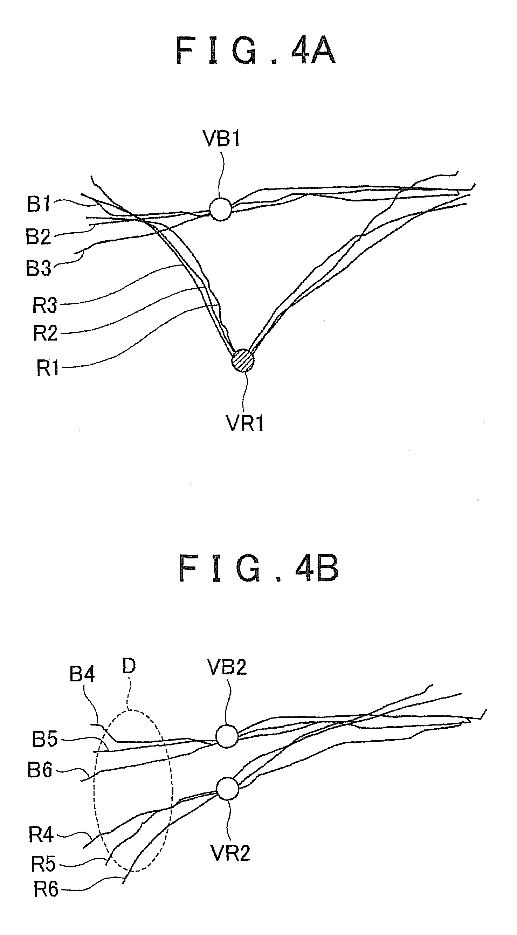

The process of the separating portion 43 is described with reference to FIGS. 4A and 4B. FIGS. 4A and 4B are an example of data having multiple peaks of the separation object of the separating portion. At a location where there is a traffic light in front of a vehicle, the driver's driving behavior changes according to the situation of the traffic light. When the traffic light is red, the driving action becomes a deceleration behavior to stop, and the vehicle speed decreases to 0. On the other hand, when the traffic light is blue, the driving action becomes an acceleration behavior or constant speed behavior, and the vehicle speed is a predetermined speed. At such locations, even at the same place, the travel patterns will become a plurality of over time, thus the vehicle speed will change greatly, the variance of vehicle speeds will increase, and the trends of acceleration and deceleration will also be different. As these kinds of surrounding environments, there is a railway crossing, the front of the stores where is a parking lot, and a location where it is easy to accumulate water etc. Also, even when the trends of acceleration and deceleration are the same, there will be locations where the travel patterns become a plurality of, and the variation of the vehicle speeds increase. For example, even the acceleration trends are the same after passing the traffic light; the vehicle speeds at the same place after passing a red signal and after passing a blue signal are different.

At such locations where the vehicle speeds change greatly over time due to the surrounding environment, the variation of vehicle speeds does not increase simply, but the vehicle speeds become stable respectively at each of the plurality of different travel patterns, and the vehicle speed has multiple peaks. When having multiple peaks, the target vehicle speed (learning vehicle speed) in each travel pattern can be set respectively by separating the vehicle speed data at each peak (each travel pattern).

The separating portion 43 calculates the variance of the vehicle speeds using the vehicle speed data at that place at each place stored in the learning database 20, and it is determined whether the variance is a threshold value or above. The determination threshold value is a threshold value for determining whether the vehicle speed under the driver's driving behavior is stable, and it is preset through experiments and simulations. As the variance, for example, a sample variance is used. When the variance of the vehicle speeds is a threshold value or above, the separating portion 43 creates a frequency distribution of the vehicle speed data at the place. Then, the separating portion 43 determines whether it has multiple peaks in the frequency distribution. For example, clustering is used in the determination. When it is determined that it has multiple peaks, the separating portion 43 separates the vehicle speed data of that place at each peak (each travel pattern) of the multiple peaks based on the result of clustering etc. Also, when the data of a certain place is separated by the separating portion 43, identification information showing the travel patterns are different at the same place is added respectively, and stored in the learning database 20.

In the example of FIG. 4A, the vehicle speed data B1, B2 ... at a location before the traffic light is illustrated; there is a travel pattern of the vehicle speed data B1, B2, B3 when the signal is blue, and a travel pattern of the vehicle speed data R1, R2, R3 when the signal is red. In this example, the data has two peaks, with two travel patterns which are deceleration trend and acceleration trend (or another trend), and the vehicle speed data is separated into the vehicle speed data B1, B2, B3, and the vehicle speed data R1, R2, R3. In the example illustrated in FIG. 4B, the vehicle speed data B4, B5 ... etc. at a location after passing the traffic light is illustrated. There is a travel pattern of the vehicle speed data B4, B5, B6 when the vehicle passes a blue signal without stopping, and a travel pattern of the vehicle speed data R4, R5, R6 when the vehicle stops at the red signal and passes after the traffic light turns blue. In this example, the data has two peaks, with two travel patterns of the acceleration trends, and the vehicle speed data is separated into the vehicle speed data B4, B5, B6 and the vehicle speed data R4, R5, R6.

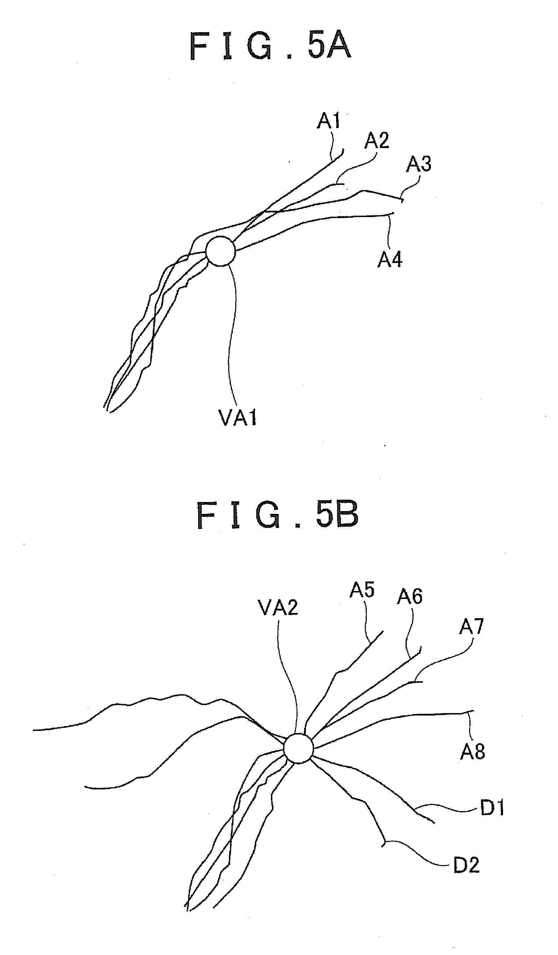

The process of the learning portion 44 is described with reference to FIGS. 4A, 4B and FIGS. 5A and 5B. FIG. 5A and 5B are an example of the data of the learning object in the learning portion 44. A place where the driver's driving behavior is stable and the vehicle speed at that place are learned from the vehicle speed data generated by the driver's driving operation, and the vehicle speed is automatically set as the target vehicle speed (learning vehicle speed) before that place (for example, within 100m). Thus, the target vehicle speed can be set at a predetermined interval, and ordinary roads where the vehicle speed changes frequently can be coped with. The place where the driver's driving behavior is stable refers to a place where the dispersion of the vehicle speeds at a same place during a plurality of times of vehicle travelling is small (for example, the variance of the vehicle speeds becomes the threshold value or below). Also, the same position does not need to be exactly the same; if the variance of the vehicle speeds is a threshold value or below within a given range (for example within several meters) in the front-rear direction and in the left-right direction, the place is regarded as a place where the driving behavior is stable. The premise is made under a plurality of times of travelling, but the learning is not performed when the number of travel times is a given times or below, such that the reliability of the learning result can be ensured.

Specifically, even if the vehicle speeds at the same place are stable (the variance is a threshold value or below), the meaning is different whether the vehicle is accelerating or decelerating. Therefore, in order to comply with the driver's acceleration and deceleration intention, it is necessary that the learning is performed considering the acceleration and deceleration trend. For example, consider the following case where in deceleration, the driver actually wants to travel at a much higher speed, but the vehicle speed decreases for some reasons (for example, foot pain), as a result, the vehicle speed becomes the same degree with a stable vehicle speed in acceleration by chance. Therefore, the learning portion 44 not only determines whether the vehicle speeds are stable based on the vehicle speed data when the learning is performed, but also stores the acceleration and deceleration trend together, then identifies the object data used for learning (data of the learning objects) from the vehicle data based on the acceleration and deceleration trend, in order to avoid mis-learning. For example, by dividing the trends into the acceleration trend, the deceleration trend and another trend, the travel times, the stability of the vehicle speeds are determined and learned at each trend. Therefore, there is a case where the learning is performed respectively using the vehicle speed data of different trends at the same place. Also, at a place where the data is separated by the separating portion 43, each separated data is learned by the learning portion 44.

The learning portion 44 determines whether the travel times (i.e. the number of pieces of data) of all the vehicle speed data corresponding to that place is a given number of times or above, at each place stored as the learning data of the learning database 20. The given number of times for determining is a sufficient number required for the learning, which is preset. When the travel times are less than the given number, the learning portion 44 does not perform learning regarding that place.

When the travel times are the given number or above, the learning portion 44 identifies the data corresponding to each place based on the acceleration and deceleration trend of each data, to distinguish the data with the same trend. Here, when the vehicle speed data of the same place includes a plurality of acceleration and deceleration trends, and the vehicle speed data corresponding to the same place is divided at each trend, again, it is determined whether the travel times of the vehicle speed data included in that trend are the given number or above at each trend, when it is less than the given number, the trend is not learned.

The learning portion 44 calculates the variance of the vehicle speed data included in the same trend at each identified trend, and determines whether the variance is a threshold value or above. The determination threshold value is a threshold value for determining whether the vehicle speed under a driver's driving behavior is stable, and is preset through experiments and simulations. The threshold value may be the same value as the threshold value used by the separating portion 43, but may also be a different value. When the variance of the vehicle speeds is the threshold value or above, the learning portion 44 does not set the target vehicle speed (learning speed), because the vehicle speed data is unstable.

When the variance of vehicle speeds is less than the threshold value, the learning portion 44 sets a target vehicle speed (learning speed) using the vehicle speed data included in the same trend. As the learning vehicle speed, for example, the average value, the median value of the vehicle speed data included in the same trend may be used as the learning vehicle speed, or the minimum value or the 20th percentile value (a vehicle speed value that includes 20% of the low vehicle speed of all the vehicle speed data) may also be used as the learning vehicle speed data for safety reasons. Also, the learning vehicle speed may also match the driver, the performance of the vehicle, for example, if the driver drives at a high average vehicle speed, then the maximum value may be used as the learning vehicle speed.

In the example illustrated in FIG. 5A, the vehicle speed data A1, A2, A3, and A4 are all data of the acceleration trend, thus all of the vehicle speed data A1, A2, A3, and A4 are used to perform the learning. In this example, at a place where the variation of the vehicle speed data A1, A2, A3, and A4 is less than the threshold value, learning vehicle speed VA1 of acceleration trend is set. In the example illustrated in FIG. 5B, the vehicle speed data A5, A6, A7, and A8 are data of the acceleration trend, while the vehicle speed data D1, D2 are data of the deceleration trend, thus the vehicle speed data A5, A6, A7, and A8 and the vehicle speed data D1, D2 are identified as acceleration trend and deceleration trend, and are learned respectively. In this example, at a place where the variation of the vehicle speed data A5, A6, A7, and A8 of acceleration trend is less than the threshold value, learning vehicle speed VA2 of acceleration trend is set. However, the vehicle speed data D1, D2 of the deceleration trend are not learned, because the number of pieces of the data is small. In this example, at the same place where the variance of the vehicle speed data A5, A6, A7, and A8 of the acceleration trend is less than the threshold value, the vehicle speed data D1, D2 of deceleration trend become the same degree of vehicle speed with the learning vehicle speed VA2 by chance. However, the vehicle speed data D1, D2 of deceleration trend are not learned together with the vehicle speed data A5, A6, A7, and A8 of acceleration trend. Also, in the example illustrated in FIGS. 5A and 5B, the learning is performed using four vehicle speed data, but this is merely an example, in practical, however, the learning is performed with more pieces of vehicle speed data.

In the above described example illustrated in FIG. 4A, the learning is performed to the separated vehicle speed data B1, B2, B3, and vehicle speed data R1, R2, R3. The vehicle speed data B1, B2, B3 are all data of the acceleration trend (or another trend), thus, all of the vehicle speed data B1, B2, B3 are used to perform the learning. In this example, at a place where the variance of the vehicle speed data B1, B2, B3 is the threshold value or below, a learning vehicle speed VB1 of acceleration trend (or another trend) is set. Also, the vehicle speed data R1, R2, R3 are all data of the deceleration trend, thus, all of the vehicle speed data R1, R2, R3 are used to perform the learning. In this example, at a place where the variance of the vehicle speed data R1, R2, R3 is less the threshold value, a learning vehicle speed VR1 of deceleration trend is set. Also, in the example illustrated in FIG. 4B, the separated vehicle speed data B4, B5, B6 and vehicle speed data R4, R5, R6 are learned respectively. The vehicle speed data B4, B5, B6 are all data of the acceleration trend, thus all of the vehicle speed data B4, B5, B6 are used to perform the learning. In this example, at a place where the variance of the vehicle speed data B4, B5, B6 is less than the threshold value, a learning vehicle speed VB2 of acceleration trend is set. Also, the vehicle speed data R4, R5, R6 are also all data of the acceleration trend, thus all of the vehicle speed data R4, R5, R6 are used to perform the learning. In this example, at a place where the variance of the vehicle speed data R4, R5, R6 is less than the threshold value, a learning vehicle speed VR2 of acceleration trend is set. Also, in the example illustrated in FIGS. 4A and 4B, the learning is performed using three vehicle speed data, but this is merely an example, in practical, however, the learning is performed with more pieces of vehicle speed data.

Also, in the example illustrated in FIG. 4B, the travel patterns are different, but it has 2 learning vehicle speeds at the same place with the same trend. Thus, when the driving assistance is performed, it is necessary to distinguish which learning vehicle speed to use. Therefore, the learning portion 44 learns the vehicle speed, the acceleration and deceleration of the each travel pattern, in a predetermined range D at a given distance from a place where the learning vehicle speed is set or where the stability of the vehicle speeds is high at each travel pattern, and uses them for determining the travel pattern (the learning vehicle speed used for the driving assistance). The learning portion 44 obtains an item that is the most different in the travel pattern within the above predetermined range, when the learning vehicle speeds are set respectively at the same place for a plurality of travel patterns with the same trend, and stores the value of the item corresponding to the learning vehicle speed of each travel pattern respectively. For example, multivariate analysis is used as the method for calculating the item that is different.

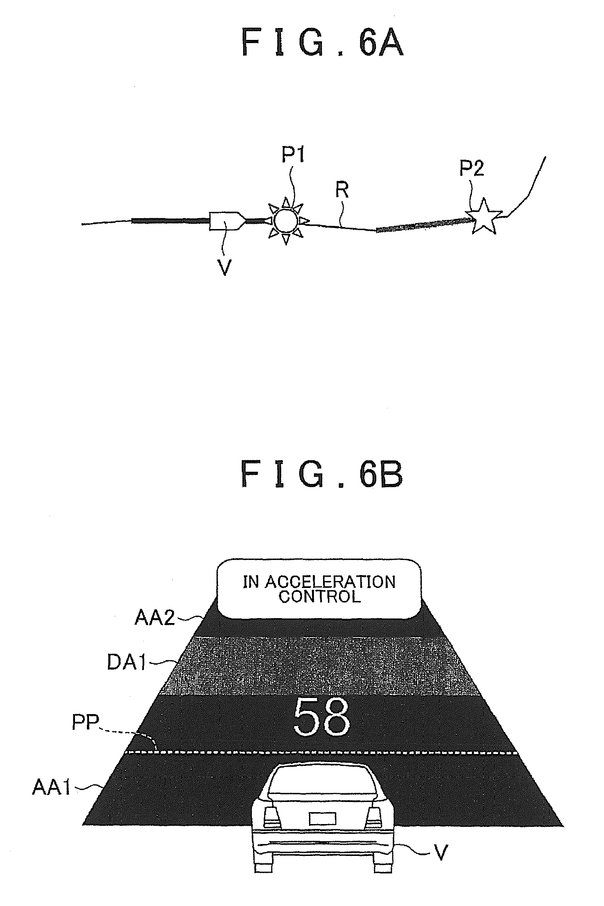

The process of the HMI control portion 45 is described with reference to FIG. 6. FIG. 6 is an example of HMI of the HMI control portion 45. In the driving assistance device 1, the target vehicle speed changes frequently at each place when travelling, instead of being a constant target vehicle speed. Thus, in the driving assistance device 1, as the HMI, information is provided about the range is from where to where, at what target vehicle speed, what kind of control is performed. By providing such information, the system can be utilized without bringing anxiety to the driver. For example, before approaching to curves, the driver knows that there is a deceleration area in advance.

The HMI control portion 45 extracts the target vehicle speed, the acceleration and deceleration trend at a place within a predetermined range (for example, within 100 m) from the current place on the current travelling route (road) of the vehicle from the learning data of the learning database 20, every time the current place of the vehicle is acquired. When there is no data (no learning vehicle speeds yet) in the learning data, the set target vehicle speed is extracted from the speed limit on the current travelling road and the learning result of other vehicles. Alternatively, the driving assistance may also not be performed in this unset area. In such cases, the HMI informs the driver of this fact.

When the target vehicle speed etc. is extracted, the HMI control portion 45 generates image information for displaying the current target vehicle speed, each control area corresponding to the acceleration and deceleration trend, the control performed currently (acceleration control, deceleration control etc.), and the current place etc., and sends the display control signal including the image information to the display 32. At this time, the areas may also be differentiated by colors according to the control, such that the area performing which kind of control is easy to be recognized. Also, the HMI control portion 45 generates sound information for outputting each control area corresponding to the current target vehicle speed and the acceleration and deceleration trend, and sends a sound control signal including the sound information to the speaker 33. Specifically, when the data has multiple peaks (a plurality of travel patterns) at a certain place, the control area etc. corresponding to the target vehicle speed and the acceleration and deceleration trend concerning each travel pattern may be output by HMI (display, sound) respectively. By performing such HMI output, the driver can select a target vehicle speed or control that is suitable for the situation of the surrounding environment.

In the example illustrated in FIGS. 6A amd 6B, as shown in FIG. 6A, the target vehicle speed of 58 (km/h) is set at the front place P1 on the current travelling route R of the vehicle V, and a target vehicle speed of 24 (km/h) is set at the place P2 further ahead. Thus, the currently travelling area until the place P1 is an area of acceleration control, the area from the place P1 to the place P2 is an area of deceleration control. FIG. 6B illustrates a display example of the display 32 of the example of FIG. 6A. The current travelling acceleration control area AA1, the deceleration control area DA1 further ahead, and the acceleration control area AA2 further ahead are displayed by different colors, the current target vehicle speed "58", the current travelling control "in acceleration control", the current place of the vehicle PP, and the vehicle V etc. are also displayed. Thus, the driver knows that currently, this is an area where the speed may be accelerated to 58 (km/h) is in the control of acceleration, and a deceleration area is present right after passing this area.

With such HMI, the driver recognizes the target vehicle speed and each control area, so when it is necessary to perform travel control until the target vehicle speed at each area, the driver presents the intention of the acceleration control or the deceleration control. As for the method of the above presentation, the switching-on operation to the acceleration control or the deceleration control is performed using the driving assistance switch 13; alternatively, when such a switch is absent, the switching-off operation is performed by stepping down the acceleration pedal gently or releasing the brake pedal under the acceleration control, and by stepping down the brake pedal gently or releasing the acceleration pedal under the deceleration control. The process of the travel control portion 46 is performed according to these operations.

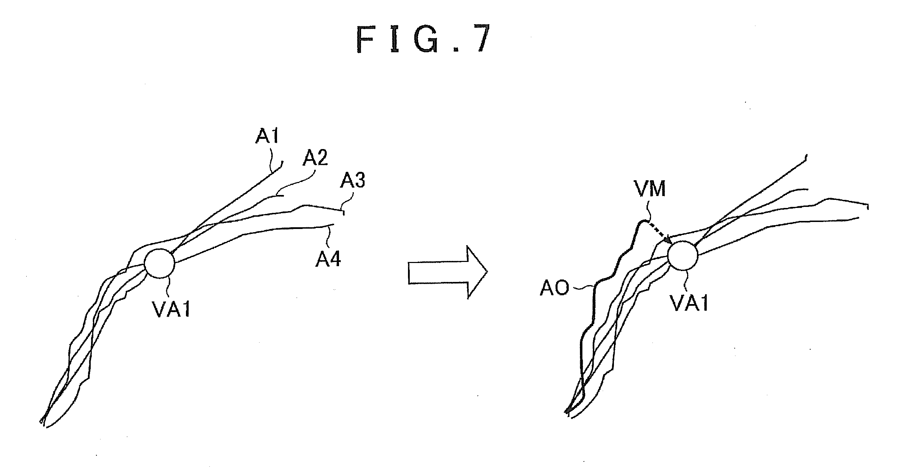

The process of the travel control portion 46 is described with reference to FIG. 7. FIG. 7 is an example for the case where it is controlled and limited in the travel control portion 46. As the basic travel control, when the preceding vehicle is absent within a given distance, the acceleration control is performed such that the vehicle speed increases to the target vehicle speed under the acceleration control, and the deceleration control is performed such that the vehicle speed decreases to the target vehicle speed under the deceleration control; when the preceding vehicle is present within the given distance, follow-up control is performed such that the vehicle follows the preceding vehicle at a target vehicle-to-vehicle distance and travels. Also, except for the acceleration control and the deceleration control, constant speed control etc. is also performed to maintain the target vehicle speed, if necessary.

Specifically, in the case of the following conditions, travel control is not performed even if the driver performs an operation showing the intention of the travel control. For example, as illustrated in FIG. 7, in the case of the acceleration trend, the vehicle speed changes as shown by the reference AO due to the driver's acceleration operation; after the vehicle speed increases to a vehicle speed VM which is higher than the target vehicle speed (learning vehicle speed) VA1, the driver performs an operation showing the intention of the acceleration control, if the deceleration control is performed as the travel control to reduce the vehicle speed from vehicle speed VM to the target vehicle speed VA1, the driver having the acceleration intention will feel uncomfortable due to the deceleration. In the case where the driver has the acceleration intention shown by the acceleration trend, when the current speed of the vehicle is higher than the target vehicle speed by a predetermined amount or above, the travel control is not performed, such that the deceleration control which brings discomfort to the driver will not be performed. Also, the travel control is not performed when the target deceleration is larger than the predetermined deceleration. Similarly, in the case where the driver has the deceleration intention shown by the deceleration trend, when the current vehicle speed of the vehicle is lower than the target vehicle speed by a predetermined amount or above, the travel control is not performed, such that the acceleration control which brings discomfort to the driver will not be performed. Also, the travel control is not performed when the target acceleration is larger than the predetermined acceleration.

The travel control portion 46 determines whether the preceding vehicle is present within the given distance, based on the information from the radar sensor 12. When the preceding vehicle is present within the given distance, the travel control portion 46 calculates the necessary target acceleration and deceleration to make the vehicle-to-vehicle distance from the preceding vehicle becomes the target vehicle-to-vehicle distance, based on the difference between the vehicle-to-vehicle distance from the preceding vehicle and the target vehicle-to-vehicle distance. When the target acceleration and deceleration is a positive value, the travel control portion 46 sets the target acceleration, and sends the target acceleration to the engine ECU 30 as an engine control signal. When the target acceleration and deceleration is a negative value, the travel control portion 46 sets the target deceleration, and sends the target deceleration to the brake ECU 31 as a brake control signal.

When the preceding vehicle is absent within the given distance under the acceleration trend, the travel control portion 46 ends the travel control when the current vehicle speed of the vehicle is higher than the target vehicle speed by a predetermined amount or above. The predetermined amount is an amount at which the deceleration control is at a degree which does not bring discomfort to the driver with acceleration intention (the predetermined amount may be 0, the deceleration control is not performed when the amount is 0), and it is preset through experiments, simulations etc. When the current vehicle speed of the vehicle is lower than a vehicle speed, which is higher than the target vehicle speed by a predetermined amount, the travel control portion 46 calculates the necessary target acceleration and deceleration to make the vehicle speed becomes the target vehicle speed, based on the difference between the current vehicle speed of the vehicle and the target vehicle speed. When the target acceleration and deceleration is a positive value, the travel control portion 46 sets the target acceleration, and sends the target acceleration to the engine ECU 30 as an engine control signal. When the target acceleration and deceleration is a negative value, the travel control portion 46 sets the target deceleration, and ends the travel control when the target deceleration is larger than the predetermined deceleration. The predetermined deceleration is the deceleration of a degree at which the driver with the acceleration intention does not feel any discomfort (the predetermined deceleration may be 0, the deceleration control is not performed when the predetermined deceleration is 0), and it is preset through experiments, simulations etc. When the target deceleration is the predetermined deceleration or below, the travel control portion 46 sets the target deceleration, and sends the target deceleration to the brake ECU 31 as a brake control signal.

When the preceding vehicle is absent within the given distance under the deceleration trend, the travel control portion 46 ends the travel control when the current vehicle speed of the vehicle is lower than the target vehicle speed by a predetermined amount or above. The predetermined amount is an amount at which the acceleration control is at a degree which does not bring discomfort to the driver with deceleration intention (the predetermined amount may be 0, the acceleration control is not performed when the amount is 0), and it is preset through experiments, simulations etc. When the current vehicle speed of the vehicle is higher than a vehicle speed, which is lower than the target vehicle speed by a predetermined amount, the travel control portion 46 calculates the necessary target acceleration and deceleration to make the vehicle speed becomes the target vehicle speed, based on the difference between the current vehicle speed of the vehicle and the target vehicle speed. When the target acceleration and deceleration is a negative value, the travel control portion 46 sets the target deceleration, and sends the target deceleration to the brake ECU 31 as a brake control signal. When the target acceleration and deceleration is a positive value, the travel control portion 46 sets the target acceleration, and ends the travel control when the target acceleration is larger than the predetermined acceleration. The predetermined acceleration is the acceleration of a degree at which the driver with the deceleration intention does not feel any discomfort (the predetermined acceleration may be 0, the acceleration control is not performed when the predetermined acceleration is 0), and it is preset through experiments, simulations etc. When the target acceleration is the predetermined acceleration or below, the travel control portion 46 sets the target acceleration, and the sends the target acceleration to the engine ECU 30 as an engine control signal.

Also, as for the conditions to end the travel control, it is configured that the travel control is ended when either the condition depending on the magnitude relationship between the current vehicle speed and the target vehicle speed, or the condition depending on the target acceleration or the target deceleration is satisfied, but it may be configured that the travel control is ended when both of the above conditions are satisfied, alternatively, it may be configured to determine only one of the condition depending on the magnitude relationship between the current vehicle speed and the target vehicle speed, and the condition depending on the target acceleration or the target deceleration. Also, when the data has multiple peaks (a plurality of travel patterns) for a certain place, the target vehicle speed of the travel control is switched according to whether the operation showing the driver's intention is acceleration control or deceleration control. Specifically, when there are a plurality of travel patterns at the same trend in the multiple peaks, the item (vehicle speed, acceleration and deceleration etc.) that is the most different in the travel pattern is learned within a predetermined range at a given distance from a place where the learning vehicle speed is set or where the stability of the vehicle speed is high at each travel pattern, thus, any of the travel patterns is identified from the value of the item before, and the target vehicle speed of the travel control is switched. In areas with such multiple peaks, during the travel control, the travel control is performed matching the low target vehicle speed, and if an operation showing the intention of acceleration control is performed, the travel control may be performed matching the high target vehicle speed, or vice versa.

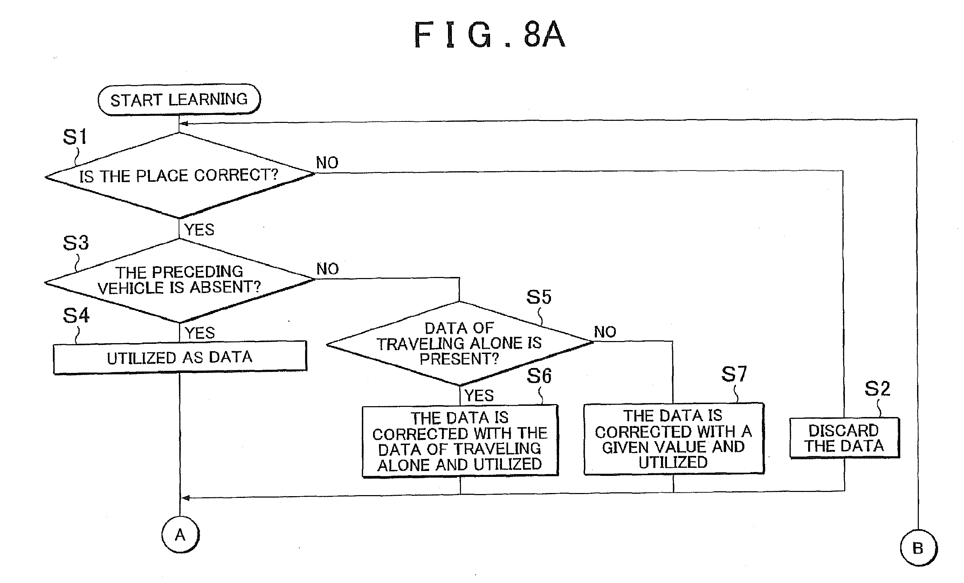

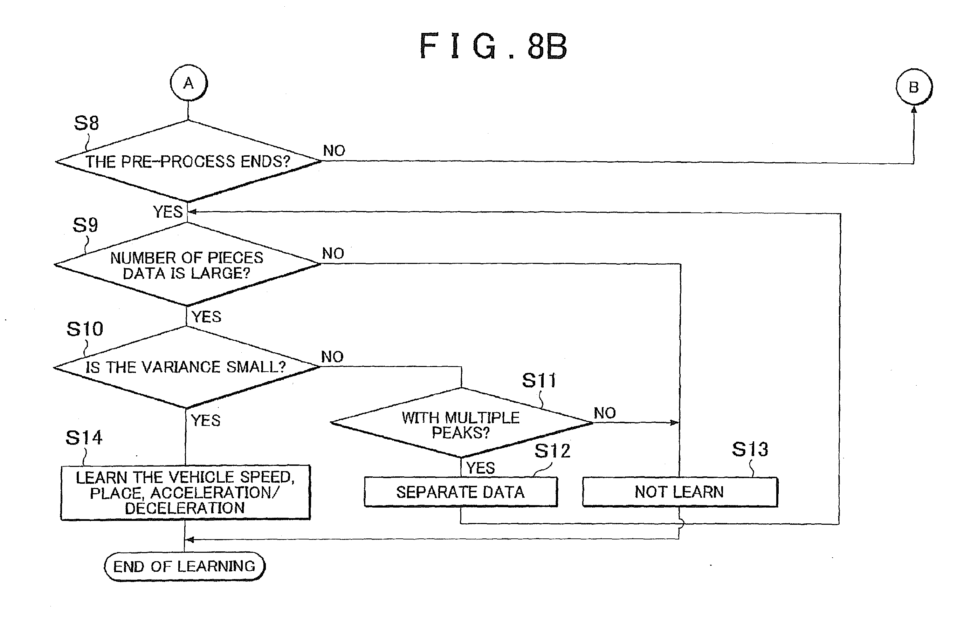

The action of the driving assistance device 1 is described with reference to FIG. 1. Specifically, the action at learning is described with reference to flowchart of FIGS. 8A and 8B. FIGS. 8A and 8B are the flowchart illustrating the action flow when learning in the driving assistance device 1. Also, when the driver makes the vehicle travel with his own acceleration and deceleration operation, generally, when the preceding vehicle is present within the given distance, the vehicle speed is adjusted so as to keep a predetermined vehicle-to-vehicle distance; when the preceding vehicle is absent within the given distance, the vehicle speed is adjusted to a desirable vehicle speed.

The vehicle speed sensor 10 detects the vehicle speed at a regular interval, and sends the vehicle speed signal to the driving assistance ECU 40. The GPS receiver 11 detects the current place of the vehicle, based on the GPS signal from the GPS satellites at a regular interval, and outputs the current place signal to the driving assistance ECU 40. The radar sensor 12 uses the electromagnetic waves at a regular interval to detect the preceding vehicle etc. in front of the vehicle, and sends the radar detection signal to the driving assistance ECU 40. If there is an operation input by the driver, the driving assistance switch 13 sends a switching signal to the driving assistance ECU 40. If each of these signals is sent, the driving assistance ECU 40 receives these signals, and obtains information from these signals.

The action at learning is described. During a time in which the vehicle is travelling under the driver's driving operation, the driving assistance ECU 40 determines whether the place detected as the current place by the GPS receiver 11 is a correct place on the route (road) (S1). If it is determined that the place is not correct in S1, the driving assistance ECU 40 discards the data, such as the acquired vehicle speed (S2).

When it is determined that the place is correct in S1, the driving assistance ECU 40 determines whether the preceding vehicle is present, based on the information from the radar sensor 12 (S3). If it is determined that the preceding vehicle is absent in S3, the driving assistance ECU 40 utilizes the vehicle speed etc. acquired at the current place as data (S4).

If it is determined that the preceding vehicle is present in S3, the driving assistance ECU 40 determines whether the past data when the preceding vehicle is absent at the current place (data when travelling alone) is stored in the learning database 20 (S5). If it is determined that the data when the preceding vehicle is absent is stored in S5, the driving assistance ECU 40 uses the vehicle speed data collected when the preceding vehicle is absent, and corrects the vehicle speed acquired at the current place when the preceding vehicle of this time is present, and the corrected vehicle speed is utilized as data (S6). If it is determined that the data when the preceding vehicle is absent is not stored in S5, the driving assistance ECU 40 adds a given value to the vehicle speed data at the current place when the preceding vehicle of this time is present and performs correction, and the corrected vehicle speed is utilized as data (S7).

Also, when utilized as data, the learning data is stored in the learning database 20 with a high sampling period, and the learning determination data is stored in the learning database 20 with a low sampling period. At this time, except for the vehicle speed, data such as the acceleration and deceleration, the acceleration and deceleration trend, the travel times, and the presence and absence of the preceding vehicle is stored in association with the place.

Then, the driving assistance ECU 40 determines whether the pre-process of the acquired data is ended (S8). If it is determined that the pre-process is not ended in S8, the driving assistance ECU 40 returns to the process of S1.

If it is determined that the pre-process is ended in S8, the driving assistance ECU 40 determines whether the number of pieces of data about the current place stored in the learning database 20 is large (whether the number of the travel times is a given times or above) (S9). If it is determined that the number of pieces of data is small, the driving assistance ECU 40 does not perform the learning at the place (S 13). Also, the process after S9 is the process toward the place stored in the learning data of the learning database 20 identified to perform the learning; the place stored in the learning determination data of the learning database 20 identified to not perform the learning is not processed.

If it is determined that the number of pieces of data is large, the driving assistance ECU 40 calculates the variance of all the vehicle speed data about the current place stored in the learning database 20, and determines whether the variance is small (S10). If it is determined that the variance is large in S10, the driving assistance ECU 40 determines whether all of the vehicle speed data at the current place has multiple peaks (S11). If it is determined that the data has multiple peaks in S11, the driving assistance ECU 40 separates the vehicle speed data at each peak of the multiple peaks (each travel pattern) (S12), and returns to the process of S9. If it is determined that the data does not have multiple peaks, the driving assistance ECU 40 does not perform the learning at that place (S13).

When it is determined the variance is small in S10, the driving assistance ECU40 uses all the data of the current place stored in the learning database 20, identifies the acceleration and deceleration trend of the vehicle speed respectively, calculates the variance of all vehicle speed data included in the same trend at each identified trend, and determines whether the variance is small. If the variance is small, the driving assistance ECU 40 sets the target vehicle speed (learning vehicle speed) using the vehicle speed data included in the same trend (S 14). If the variance is large, the driving assistance ECU 40 does not set the target vehicle speed (learning speed). Also, at the place where the data has multiple peaks, the above learning is performed respectively at each travel pattern.

The action of the HMI is described. When the vehicle is travelling, the driving assistance ECU 40 extracts the target vehicle speed (learning speed) and the acceleration and deceleration trend from the learning data of the learning database 20 at a place within a predetermined range from the current place on the current travelling route (road) of the vehicle, each time the current place of the vehicle is acquired. When there is no learning vehicle speed, the set target vehicle speed such as the speed limit on the current travelling road is used. Then, the driving assistance ECU 40 uses the target vehicle speed and the acceleration and deceleration trend to generate the image information for the display of HMI, and sends the display control signal to the display 32. The display 32 displays the image of the display control signal, if the display control signal is received. Also, the HMI control portion 45 uses the target vehicle speed and the acceleration and deceleration trend to generate sound information for the sound output of the HMI, and sends the sound control signal to the speaker 33. The speaker 33 outputs sound of the sound control signal, if the sound control signal is received. The driver receives the information provided by the display image on the display 32 and the sound output from the speaker 33, and performs operation to start any control using the driving assistance switch 13, when there is intention of acceleration control or deceleration control by the driving assistance device 1.

The action of the travel control is described. When the driver expresses the intention of acceleration control or deceleration control via the driving assistance switch 13 etc., the driving assistance ECU 40 determines whether the preceding vehicle is present within the given distance, based on the information from the radar sensor 12; when the preceding vehicle is present within the given distance, the target acceleration and deceleration for becoming the target vehicle-to-vehicle distance is calculated, based on the difference between the vehicle-to-vehicle distance from the preceding vehicle and the target vehicle-to-vehicle distance. Then, the driving assistance ECU 40 sets the target acceleration when the target acceleration and deceleration is a positive value, and sends the engine control signal to the engine ECU 30; the driving assistance ECU 40 sets the target deceleration when the target acceleration and deceleration is a negative value, and sends the brake control signal to the brake ECU 31. The engine ECU 30 performs the engine control for becoming the target acceleration shown by the engine control signal, if the engine control signal is received. The brake ECU 31 performs the brake control for becoming the target deceleration shown by the brake control signal, if the brake control signal is received. The vehicle follows the preceding vehicle at a vehicle-to-vehicle distance at the degree of the target vehicle-to-vehicle distance by each control.

When the preceding vehicle is absent within the given distance, under the intention of acceleration control (the acceleration trend), the driving assistance ECU 40 ends the travel control, when the current vehicle speed of the vehicle is higher than the target vehicle speed by a predetermined amount or above; and calculates the target acceleration and deceleration for becoming the target vehicle speed, based on the difference between the current vehicle speed of the vehicle and the target vehicle speed when the current vehicle speed of the vehicle is lower than a vehicle speed, which is higher than the target vehicle speed by a predetermined amount. Then, the driving assistance ECU 40 sets the target acceleration when the target acceleration and deceleration is a positive value, and sends the engine control signal to the engine ECU 30. The driving assistance ECU 40 sets the target deceleration when the target acceleration and deceleration is a negative value; ends the travel control when the target deceleration is larger than the predetermined deceleration; sets the target deceleration when the target deceleration is the predetermined deceleration or below; and sends the brake control signal to the brake ECU 31. The engine ECU 30 and the brake ECU 31 perform the similar control as described above, if the control signal is received. By each control, the vehicle accelerates in the acceleration area, and the vehicle speed becomes the target vehicle speed at the place where the target vehicle speed is set. However, there are cases where the deceleration is performed at a degree which the driver does not feel any discomfort.

When the preceding vehicle is absent within the given distance and under the intention of deceleration control (the deceleration trend), the driving assistance ECU 40 ends the travel control, when the current vehicle speed of the vehicle is lower than the target vehicle speed by a predetermined amount or above; and the driving assistance ECU 40 calculates the target acceleration and deceleration for becoming the target vehicle speed, based on the difference between the current vehicle speed of the vehicle and the target vehicle speed when the current vehicle speed of the vehicle is higher than a vehicle speed, which is lower than the target vehicle speed by a predetermined amount. Then, the driving assistance ECU 40 sets the target deceleration when the target acceleration and deceleration is a negative value, and sends the brake control signal to the brake ECU 31. The driving assistance ECU 40 sets the target acceleration when the target acceleration and deceleration is a positive value; ends the travel control when the target acceleration is larger than the predetermined acceleration; sets the target deceleration when the target acceleration is the predetermined deceleration or below; and sends the engine control signal to the engine ECU 30. The engine ECU 30 and the brake ECU 31 perform the similar control as described above, if the control signal is received. By each control, the vehicle decelerates in the deceleration area, and the vehicle speed becomes the target vehicle speed at the place where the target vehicle speed is set. However, there are cases where the acceleration is performed at a degree which the driver does not feel any discomfort.

According to the driving assistance device 1, when learning the vehicle speed generated by the driver's acceleration and deceleration operation, by adding the acceleration and deceleration trend to the vehicle speed generated by the driver's acceleration and deceleration operation at the same place, the vehicle speeds with small dispersion when the driver's acceleration and deceleration intention is the same can be learned, and the learned vehicle speed can be used to perform driving assistance in accord with the driver's acceleration and deceleration intention. Through this driving assistance, the acceleration or the deceleration that brings discomfort to the driver will not be performed.

According to the driving assistance device 1, when performing the driving assistance using the target vehicle speed (learning vehicle speed), when the current vehicle speed is higher than the target vehicle speed by a predetermined amount or above under the acceleration trend, or when the current vehicle speed is lower than the target vehicle speed by a predetermined amount or above under the deceleration trend, the driving assistance is not performed based on the target vehicle speed, thus, deceleration during the acceleration control or acceleration during the deceleration control that brings discomfort to the driver will not be performed. Also, according to the driving assistance device 1, when performing the driving assistance using the target vehicle speed, when the target deceleration is larger than the predetermined deceleration under the acceleration trend, or when the target acceleration is larger than the predetermined acceleration under the deceleration trend, the driving assistance is not performed based on the target vehicle speed, thus deceleration during the acceleration control or acceleration during the deceleration control that brings discomfort to the driver will not be performed.

According to the driving assistance device 1, before performing the learning using the vehicle speed data generated by the driver's acceleration and deceleration operation, it is determined whether the vehicle speed data at the same place has multiple peaks. For the vehicle speed data that has multiple peaks, the vehicle speed data corresponding to a plurality of travel patterns are separated at each peak respectively, such that the vehicle speed data that is suitable for learning at each travel pattern can be learned respectively, and the learning opportunities can be increased. Further, according to the driving assistance device 1, the driving assistance is performed based on the vehicle speed learned from the vehicle speed data of the same travel pattern with the travel pattern of travelling, thus the learned vehicle speed can be used for performing driving assistance in accord with the driver's acceleration and deceleration intention.

According to the driving assistance device 1, before using the vehicle speed data generated by the driver's acceleration and deceleration operation to perform the learning, the vehicle speed acquired when the preceding vehicle is present is corrected, using the vehicle speed data acquired and stored when the preceding vehicle is absent, thereby the vehicle speed data further in accord with the driver's intention can be used for learning, and a more precise learning can be performed.

The embodiments of the present invention are described above, however, the present invention is not limited to the above embodiments, and may be embodied in various forms.

For example, the present embodiment is applied to a driving assistance device that learns the vehicle speed, and performs travel control and information provision using the learned vehicle speed, but it may also be applied to a driving assistance device that only performs any one of the travel control and the information provision. Also, the present embodiment is configured that the driving operation of the driver is prioritized, and the travel control is performed only when instructed by the driver, but it may also be configured that the travel control is performed constantly if being instructed by the driver at the beginning of the driving (automatic drive). Also, the present embodiment is configured with a plurality of ECUs such that the instruction is sent from the driving assistance ECU to the engine ECU and brake ECU to perform travel control, however, it may also be configured with one ECU such that the driving assistance ECU controls each actuator of the engine and the brake directly to perform travel control. Also, the present embodiment uses an engine as the driving source of the vehicle, however, other driving sources such as motor, or a hybrid source of motor and engine etc. may also be used. Also, the present embodiment uses a hydraulic brake, but other brakes such as a brake-by-wire may be used. Also, the present embodiment uses display on the display and the sound output of the speaker as information provision; but it may be provided by either one of the display and the sound output, other information provision may also be used.

Also, the present embodiment is configured that the object data that is used for learning is identified according to whether the acceleration and deceleration trends at the same place are the same, but it may also calculate the dispersion of degrees of the plurality of acceleration and deceleration included in all the data at the same place, and distinguish the object data that is used for learning based on whether the dispersion is small. At this time, at the same place, there is a case where there is only one data group with small dispersion of the degree of the acceleration and deceleration, and where there are a plurality of data groups with small dispersion of the degree of acceleration and deceleration (a group that has small dispersion of the degree of acceleration, and a group that has small dispersion of the degree of deceleration, also, at the group of the acceleration, a group that has small dispersion of the degree of acceleration on the rapid acceleration, and a group that has small dispersion of the degree of acceleration on the slow acceleration). As a method for determining whether the degree of acceleration and deceleration has a small dispersion, for example, the variance (sampling variance etc.) of the plurality of acceleration and deceleration at the same place is calculated, and it is determined that the dispersion is small when the variance is less than a threshold value.

Also, the present embodiment divides the acceleration and deceleration trend into three trends, which are the acceleration trend, the deceleration trend, and another trend, but it may also divides the acceleration trend into a plurality of trends, for example, rapid acceleration and slow acceleration, and divides the deceleration trend into a plurality of trends, for example, rapid deceleration and slow deceleration. For example, by obtaining the dispersion of the acceleration and deceleration trend mentioned above, a plurality of acceleration trend groups with small dispersion can be classified respectively at the acceleration side.

Also, in the present embodiment, as a method for determining whether the dispersion of a plurality of vehicle speeds is small, a method of determining whether the variance value is less than a threshold value is shown, but other methods may also be applied as method for determining the dispersion, for example, a predetermined vehicle speed range is set, when a plurality of vehicle speeds enter the predetermined vehicle speed range, it is determined that the dispersion is small. Various determination methods may also be applied to determine the above dispersion of the acceleration and deceleration.

Also, in the present embodiment, as a method for determining multiple peaks, a method of determining based on the frequency distribution of a plurality of vehicle speeds is shown, but it may also be configured that a plurality of patterns for the surrounding environment that becomes the reason of multiple peaks such as traffic light are preset; the surrounding environment of the vehicle is detected by the surrounding environment detecting means using a camera etc.; when the detected surrounding environment changes according to the time and becomes the reason of multiple peaks, the classifying means (ECU) is used to classify the vehicle speeds into a plurality of patterns of the surrounding environment; when storing the vehicle speeds of the same place, the vehicle speeds are stored in association with the surrounding environment pattern; and the plurality of vehicle speeds of the same pattern at the same place are separated respectively, based on the associated surrounding environment pattern by the separating means. When the separating means separates a plurality of vehicle speeds at each surrounding environment pattern, the above similar learning is performed respectively using the plurality of vehicle speeds corresponding to the surrounding environment pattern at each separated surrounding environment pattern, and after the learning, when the vehicle travels at a place where the vehicle speed is learned, the driving assistance is performed based on the learned vehicle speed, using the plurality of vehicle speeds corresponding to the same surrounding environment pattern with the travelling surrounding environment pattern.

Also, the present embodiment is configured that, in order to determine the sampling period of the vehicle speed data, the density of vehicle speeds in each predetermined area is calculated using a coordinate system in which the horizontal axis shows the place on the travel route and the vertical axis shows the vehicle speed; the dispersion of the vehicle speeds is determined based on the stability of the density; and the vehicle speed data is collected with a high sampling period at a place where the dispersion of vehicle speeds is small; but it may also be configured that the density of vehicle speeds in each predetermined area is calculated using a predetermined formula etc., without using such a coordinate system; and the stability of the density is determined. Also, the determination may be performed using the variance etc. of the vehicle speeds, without using the density.

Also, the present embodiment is configured that the vehicle speed data when the preceding vehicle is present is corrected and used for the learning, however, the vehicle speed data when the preceding vehicle is present may be discarded.

Also, the present embodiment is configured to determine whether the vehicle speed data has multiple peaks, and the learning is performed after separating the vehicle speed data at each peak when the data has multi peaks; however, the learning may be performed without the above determination of multiple peaks and separation. Even if the learning is performed using the vehicle speed data with multi peaks as it is, the vehicle speed data of the learning objects may also be identified at a certain degree by determining the acceleration and deceleration trend.

## Claims

1. A driving assistance device that learns travel data during a time in which a driver performs driving operations to make a vehicle travel, and performs driving assistance based on a learned result, **characterized by** comprising:
storage means (20, 41) for storing respectively a vehicle speed and an acceleration and deceleration tendency at a same place on a travel route, for a plurality of times, during a time in which the driver performs acceleration and deceleration operations;
learning means (44) for identifying a plurality of object vehicle speeds used for learning from the plurality of vehicle speeds at the same place stored in the storage means (20, 41) based on the acceleration and deceleration tendency, and when a dispersion of the plurality of vehicle speeds identified as the object vehicle speeds is small, learns the vehicle speed at the same place based on the plurality of vehicle speeds having the small dispersion; and
driving assistance means (30, 31, 32, 33, 45, 46) for performing driving assistance, based on the vehicle speed learned by the learning means (44), when the vehicle travels at a place where the vehicle speed has been learned by the learning means (44).

2. The driving assistance device according to claim 1, wherein the learning means (44) identifies the vehicle speeds having a same acceleration and deceleration tendency from the plurality of vehicle speeds at the same place stored in the storage means (20, 41) as the plurality of object vehicle speeds.

3. The driving assistance device according to claim 1, wherein the learning means (44) identifies a plurality of vehicle speeds having a small dispersion of degrees of acceleration and deceleration from the plurality of vehicle speeds at the same place stored in the storage means (20, 41) as the plurality of object vehicle speeds.

4. The driving assistance device according to any one of claims 1 to 3, wherein the driving assistance means (30, 31, 32, 33, 45, 46) does not perform the driving assistance at the learned place based on the learned vehicle speed, when the vehicle speed learned by the learning means (44) requires an acceleration and a current vehicle speed of the vehicle is higher than the learned vehicle speed by a predetermined amount or above, or when the vehicle speed learned by the learning means (44) requires a deceleration and the current vehicle speed of the vehicle is lower than the learned vehicle speed by a predetermined amount or above.

5. The driving assistance device according to any one of claims 1 to 4, further comprising:
separating means (43) for analysing frequencies of the plurality of vehicle speeds at the same place stored in the storage means (20, 41), and when the frequencies of the plurality of vehicle speeds are determined to have multiple peaks by the analysis, separates the plurality of vehicle speeds into a plurality of vehicle speeds corresponding to a travel pattern at each peak of the multiple peaks,
wherein the learning means (44) identifies the plurality of object vehicle speeds from the plurality of vehicle speeds corresponding to the travel pattern of a peak at each separated peak based on the acceleration and deceleration tendency, when the separating means (43) separates the plurality of vehicle speeds at each peak of the multiple peaks, and learns the vehicle speed at the same place based on the plurality of vehicle speeds having the small dispersion, when the dispersion of the plurality of vehicle speeds identified as the object vehicle speeds is determined to be small,
wherein the driving assistance means (30, 31, 32, 33, 45, 46) performs the driving assistance based on the vehicle speed learned by the learning means (44) using the plurality of vehicle speeds corresponding to a travel pattern which matches the travelling travel pattern, when the separating means (43) separates the plurality of vehicle speeds at each peak of the multiple peaks and the vehicle travels at a place where the vehicle speed has been learned by the learning means (44).

6. The driving assistance device according to any one of claims 1 to 4, further comprising:
surrounding environment detecting means for detecting surrounding environments of the vehicle;
classifying means for classifying the surrounding environments into a plurality of surrounding environment patterns, when the surrounding environment detected by the surrounding environment detecting means changes over time and becomes a reason for changing a behavior of the vehicle; and
separating means (43) for separating the plurality of vehicle speeds at the same place stored in the storage means (20, 41) into a plurality of vehicle speeds corresponding to a surrounding environment pattern at each surrounding environment pattern, when the classifying means classifies the surrounding environments into a plurality of surrounding environment patterns,
wherein the learning means (44) identifies a plurality of object vehicle speeds from the plurality of vehicle speeds corresponding to the surrounding environment pattern based on the acceleration and deceleration, when the separating means (43) separates the plurality of vehicle speeds at each surrounding environment pattern, and learns the vehicle speed at the same place based on the plurality of vehicle speeds identified as the object vehicle speeds having the small dispersion, when the dispersion of the plurality of vehicle speeds identified as object is determined to be small,
wherein the driving assistance means (30, 31, 32, 33, 45, 46) performs the driving assistance based on the vehicle speed learned by the learning means (44) using the plurality of vehicle speeds corresponding to a surrounding environment pattern which matches the travelling surrounding environment pattern, when the separating means (43) separates the plurality of vehicle speeds at each surrounding environment pattern and the vehicle travels at the place where the vehicle speed has been learned by the learning means (44).

7. The driving assistance device according to any one of claims 1 to 4, further comprising:
preceding vehicle detecting means (12) for detecting a preceding vehicle travelling in front of the vehicle; and
correcting means (42) for correcting the vehicle speeds stored during a time in which the preceding vehicle is detected by the preceding vehicle detecting means (12) among the plurality of vehicle speeds at the same place stored in the storage means (20, 41) to the side of the vehicle speeds stored during a time in which the preceding vehicle is not detected, by using the vehicle speeds stored during the time in which the preceding vehicle is not detected by the preceding vehicle detecting means, and stores corrected vehicle speeds in the storage means (20, 41),
wherein, when the correcting means (42) performs the correction, the learning means (44) identifies the plurality of object vehicle speeds from the corrected vehicle speeds at the same place stored in the storage means (20, 41) and the vehicle speeds stored during the time in which a preceding vehicle is not detected by the preceding vehicle detecting means (12) based on the acceleration and deceleration, and learns the vehicle speed at the same place based on the plurality of vehicle speeds having the small dispersion, when the dispersion of the plurality of vehicle speeds identified as the object vehicle speeds is small.

8. The driving assistance device according to any one of claims 1 to 7, wherein the storage means (20, 41) stores respectively the vehicle speeds at a plurality of places on the travel route at each first period, and calculates a dispersion of vehicle speeds within a predetermined range based on the stored vehicle speeds at the plurality of places, and when the calculated dispersion of the vehicle speeds within the predetermined range is small, stores the vehicle speed concerning a place included within the predetermined range at each second period which is shorter than the first period.

9. The driving assistance device according to any one of claims 1 to 8, wherein the driving assistance means (30, 31, 32, 33, 45, 46) provides the learned vehicle speed at the learned place and information of the acceleration and deceleration control performed based on the learned vehicle speed, when the vehicle travels at a place where the vehicle speed has been learned by the learning means (44).
